(19)

Europäisches
Patentamt
European
Patent Office
Office européen
des brevets

(11)    **EP 1 642 926 B1**

(12)    **EUROPEAN PATENT SPECIFICATION**

(45) Date of publication and mention
of the grant of the patent:
**20.06.2007  Bulletin 2007/25**

(51) Int Cl.:
*C08J 9/00* *(2006.01)*        *C08J 9/12* *(2006.01)*

(21) Application number: **05021143.2**

(22) Date of filing: **28.09.2005**

(54) **Non-crosslinked polyethylene foam**

Unvernetzter Polyethylenschaum

Mousse de polyéthylène non réticulée

(84) Designated Contracting States:
**DE FR GB**

(30) Priority: **30.09.2004  JP 2004286200**

(43) Date of publication of application:
**05.04.2006  Bulletin 2006/14**

(73) Proprietor: **TOSOH CORPORATION**
**Shunan-shi**
**Yamaguchi 746-8501 (JP)**

(72) Inventor: **Abe, Shigehiko**
**Yokkaichi-shi**
**Mie 510-0007 (JP)**

(74) Representative: **TBK-Patent**
**Bavariaring 4-6**
**80336 München (DE)**

(56) References cited:
**US-A- 4 644 013          US-A- 5 369 136**
**US-A- 5 416 129          US-B1- 6 225 363**

• **PATENT ABSTRACTS OF JAPAN vol. 009, no. 045
(C-268), 26 February 1985 (1985-02-26) & JP 59
189134 A (ASAHI KASEI KOGYO KK), 26 October
1984 (1984-10-26)**

Printed by Jouve, 75001 PARIS (FR)

**Description**

The present invention relates to a non-crosslinked polyethylene foam. More particularly, the invention relates to a non-crosslinked polyethylene foam comprising a polyethylene resin satisfying specific properties. The molding has good foaming property, does not have unevenness in thickness when foaming, has excellent surface properties, and has high expansion ratio.

Conventionally, a linear high density polyethylene has the properties of (1) having high mechanical strength such as rigidity, and having excellent balance in physical properties; (2) having chemical stability, having excellent weatherability, and being difficult to be corroded with chemicals; (3) having high melting temperature, and being excellent in heat resistance; and (4) being light, and being inexpensive, and in addition to those properties, has excellent melt processability, and can be applied to melt processing methods such as extrusion molding, blow molding, injection molding or inflation molding. In view of those excellent properties, such a linear high density polyethylene is widely used in various fields.

Amorphous resins such as polystyrene have hitherto been used for a foam of thermoplastic resins for the reason that foaming can relatively be easily conducted. However, recently, demand is increased to the improvement in quality of a foam, for example, a foam having excellent heat resistance or impact resistance. For this reason, a foam obtained using a linear high density polyethylene is demanded.

However, the linear high density polyethylene has relatively high crystallinity and greatly changes its viscoelasticity by slight temperature change. Therefore, such a linear high density polyethylene has the problem that temperature range suitable to processing for foaming is extremely narrow. Further, the linear polyethylene has extremely low melt viscosity at a melting point or higher, cannot maintain cells when foamed, and is liable to break cells. For those reasons, it has been difficult to obtain foams having closed cells and also having excellent mechanical properties and heat resistance, or foams having high expansion ratio. Therefore, to obtain a foam having closed cells and good quality or a foam having high expansion ratio using a linear high density polyethylene, it has been required to increase melt tension of such a linear high density polyethylene.

In view of the above demand, the following methods are proposed as methods for increasing melt tension of a linear high density polyethylene: (1) a method of mixing a high molecular weight polyethylene having high melt tension as described in, for example, JP-A-10-7726; (2) a method of mixing a polyethylene having high melt tension produced using a chromium catalyst as described in, for example, JP-A-2-132109; (3) a method of mixing a low density polyethylene produced by a high pressure radical polymerization method as described in, for example, JP-A-7-134359; (4) a method of increasing melt tension by adding a crosslinking agent or a peroxide to a polyethylene to modify the polyethylene as described in, for example, JP-A-2003-327757; and (5) a method of modifying a polyethylene with an unsaturated carboxylic acid or the like as described in, for example, JP-A- 11-246713.

However, to increase the melt tension to a level necessary for foaming in the methods proposed in JP-A-10-7726, JP-A-2-132109 and JP-A-7-134359, it is necessary to use a large amount of resins to be blended. This leads to increase a production cost. In addition, a linear high density polyethylene constituting a foam lacks in uniformity, resulting in deterioration of inherent properties of the polyethylene. The method proposed in JP-A-2003-327757 involves the following problems. It is difficult to control a crosslinking reaction induced as a side reaction due to use of a crosslinking agent or a peroxide. Gel generates to adversely affect appearance and mechanical properties of a foam. Further, there is a limit to freely control processability, thus narrowing control range. The method proposed in JP-A-11-246713 involves the problems that chemical stability of the linear high density polyethylene deteriorates, and formation of a styrene-based graft product gives rises to the problem in resin recycling property.

Accordingly, an object of the present invention is to provide a non-crosslinked polyethylene foam comprising a polyethylene resin, which has good foamed state (small proportion of ununiform cells or course cells, and large proportion of uniform cells), does not have thickness unevenness of a foam, has excellent surface properties, and has high expansion ratio, while maintaining inherent properties of a linear high density polyethylene.

As a result of extensive investigations to overcome the above-described problems in the prior art, it has been found that a non-crosslinked polyethylene foam comprising a polyethylene resin satisfying specific properties has good foaming, does not have unevenness in thickness when foaming, has excellent surface properties, and has excellent mechanical properties and heat resistance. The present invention has been completed based on this finding.

The present invention provides a non-crosslinked polyethylene foam obtained by foaming a polyethylene resin satisfying the following requirements (a) to (d):

(a) a density is 890-980 kg/m$^3$;
(b) the number of long chain branches having 6 or more carbon atoms is 0.01-3 per 1,000 carbon atoms;
(c) a melt tension (mN) measured at 190°C ($MS_{190}$) and MFR (melt flow rate: g/10 min, 190°C) under a load of 2.16 kg are satisfied with the following formula (1):

$$MS_{190} > 22 \times MFR^{-0.88} \qquad (1)$$

and a melt tension (mN) measured at 160°C ($MS_{160}$) and MFR (melt flow rate: g/10 min, 190°C) under a load of 2.16 kg are satisfied with the following formula (2):

$$MS_{160} > 110 - 110 \times \log (MFR) \qquad (2)$$

(d) an endothermic curve obtained in temperature-rise measurement by a differential scanning calorimeter shows one peak.

The present invention is described in detail below.

The polyethylene resin constituting the non-crosslinked polyethylene foam of the present invention has a density of 890-980 $kg/m^3$, preferably 940-980 $kg/m^3$, more preferably 951-980 $kg/m^3$, in terms of a value measured by a density gradient tube method according to JIS K6922-1 (1998). Where the density is lower than 890 $kg/m^3$, shrinkage after foaming is too large, so that a uniform foam is not obtained. Where the density exceeds 980 $kg/m^3$, moldable temperature range at foaming is very narrow, so that a foam is not obtained.

The polyethylene resin used in the present invention has a weight average molecular weight (Mw) of 30,000-10,000,000, preferably 40,000-8,000,000, more preferably 50,000-5,000,000, in terms of a linear polyethylene conversion. Where Mw is lower than 30,000, a foam obtained has remarkably low strength, which is not desirable. Where Mw exceeds 10,000,000, the resin has too high viscosity, and there is the possibility that it is extremely difficult to conduct foaming.

The polyethylene resin used in the present invention has an MFR at 190°C under a load of 2.16 kg of 0.1-50 g/10 min, preferably 1-10 g/10 min, more preferably 2-5 g/10 min. Where the MFR is lower than 0.1 g/10 min or exceeds 50 g/10 min, it is extremely difficult to conduct foaming, and there is the possibility that a uniform foam is not obtained.

The polyethylene resin used in the present invention has the number of long chain branches of 0.01-3 per 1,000 carbon atoms. Where the number is lower than 0.01, the cells cannot be maintained, and there is the possibility that a good foam is not obtained. On the other hand, where the number exceeds 3, there is the possibility that such a polyethylene resin gives a foam having poor mechanical properties. The term "the number of long chain branches" used herein means the number of branches of hexyl groups or more (carbon atoms: 6 or more) detected by $^{13}$C-NMR measurement.

The polyethylene resin used in the present invention has the relationship represented by the following formula (1), preferably (1)', more preferably (1)", between a melt tension $MS_{190}$ (mN) measured at 190°C and MFR (g/10 min, 190°C) under a load of 2.16 kg:

$$MS_{190} > 22 \times MFR^{-0.88} \qquad (1)$$

$$MS_{190} > 30 \times MFR^{-0.88} \qquad (1)'$$

$$MS_{190} > 5 + 30 \times MFR^{-0.88} \qquad (1)''$$

Where the formula (1) is not satisfied, the power for maintaining the cells is poor, and there is the possibility that a good foam is not obtained.

Further, the polyethylene resin used in the present invention has the relationship represented by the following formula (2), preferably (2)', more preferably (2)", between a melt tension $MS_{160}$ (mN) measured at 160°C and MFR (g/10 min, 190°C) under a load of 2.16 kg:

$$MS_{160} > 110 - 110 \times \log (MFR) \qquad (2)$$

$$MS_{160} > 130 - 110 \times \log(MFR) \qquad (2)'$$

$$MS_{160} > 150 - 110 \times \log(MFR) \qquad (2)''$$

Where the formula (2) is not satisfied, the power for maintaining the cells is poor, and there is the possibility that a foam having high expansion ratio and uniform cells is not obtained.

The polyethylene resin used in the present invention has the characteristic that an endothermic curve obtained in temperature-rise measurement by a differential scanning calorimeter (DSC) shows one peak. The foam having this characteristic has small temperature dependency of elastic modulus, and has excellent heat resistance. The endothermic curve is obtained by filling 5-10 mg of a sample in an aluminum-made pan, and rising temperature by DSC. The temperature-rise measurement is conduct that after previously allowing the pan containing a sample to stand at 230°C for 3 minutes, the temperature is lowered to -10°C at a temperature-lowering rate of 10°C/min, and then the temperature is elevated to 150°C at a temperature-rising rate of 10°C/min.

The polyethylene resin used in the present invention preferably has a shrinkage factor (g' value) evaluated by gel permeation chromatography (GPC)/intrinsic viscometer of 0.1 to less than 0.9, preferably 0.1-0.7. By having the property in this range, collapse of cells in foaming the polyethylene resin is suppressed. As a result, the foam obtained has high expansion ratio, thereby improving uniformity of the cells. The term "shrinkage factor (g' value)" used herein means a parameter showing the degree of long chain branches, and is a ratio of an intrinsic viscosity of a polyethylene resin in an absolute molecular weight three times a weight average molecular weight (Mw) to an intrinsic viscosity in the same molecular weight of high density polyethylene (HDPE) having no branch. There is the relationship as shown in the following formula (3), preferably (3)', between the g' value and a shrinkage factor (g value) evaluated by GPC/light scattering equipment, and by this relationship, the foaming property is further improved. The "g value" is a ratio of a square average of radius of gyration of an ethylene resin in an absolute molecular weight three times Mw to a square average of radius of gyration in the same molecular weight of HDPE having no branch.

$$0.2 < \log(g')/\log(g) < 1.3 \qquad (3)$$

$$0.5 < \log(g')/\log(g) < 1.0 \qquad (3)'$$

Further, it is desirable for improvement of the foaming property that there is the relationship as shown in the following formula (4), preferably (4)', more preferably (4)", between the g value ($g_{3M}$) in an absolute molecular weight three times Mw and the g value ($g_M$) in an absolute molecular weight one time Mw:

$$0 < g_{3M}/g_M \leq 1 \qquad (4)$$

$$0 < g_{3M}/g_M \leq 0.9 \qquad (4)'$$

$$0 < g_{3M}/g_M \leq 0.8 \qquad (4)''$$

The polyethylene resin used in the present invention is preferably obtained by polymerizing ethylene and optionally an olefin having 3 or more carbon atoms in the presence of a macromonomer which is a polyethylene having terminal vinyl groups obtained by polymerizing ethylene, or a copolymer having terminal vinyl groups obtained by copolymerizing ethylene and an olefin having 3 or more carbon atoms, has the following requirements:

(e) a number average molecular weight (Mn) is 2,000 or higher, and

(f) Mw/Mn is 2-5.

The term "macromonomer" used herein means a polyolefin having terminal vinyl groups; and is preferably a polymer having terminal vinyl groups obtained by polymerizing ethylene, or a copolymer having terminal vinyl groups obtained by copolymerizing ethylene and an olefin having 3 or more carbon atoms. More preferable macromonomer is a linear polyethylene or a linear copolymer, each having terminal vinyl groups, wherein of branches other than branches originated from an olefin having 3 or more carbon atoms optionally used, long chain branches (i.e., branches of hexyl group or more detected by $^{13}$C-NMR measurement) are less than 0:01 per 1,000 main chain methylene carbons.

Examples of the olefin having 3 or more carbon atoms include α-olefin such as propylene, 1-butene, 1-hexene, 1-octene, 4-methyl-1-pentene, 3-methyl-l-butene or vinyl cycloalkane, cyclic olefins such as norbornene or norbomadiene, dienes such as butadiene or 1,4-hexadiene, and styrene. Those olefins can be used alone or as mixtures of two or more thereof.

Where an ethylene polymer having terminal vinyl groups, or an ethylene copolymer having terminal vinyl groups, is used as a macromonomer, the macromonomer has a number average molecular weight (Mn) in terms of a linear polyethylene conversion of 5,000 or more, preferably 10,000 or more, more preferably 15, 000, and also has a weight average molecular weight (Mw) in terms of a linear polyethylene conversion of 10,000 or more, preferably 15,000 or more, more preferably 20, 000 or more. Ratio of a weight average molecular weight (Mw) to a number average molecular weight (Mn), i.e., Mw/Mn, is 2-5, preferably 2-4, and more preferably 2-3.5. Ratio (Z) of the number of vinyl terminals and the number of saturated terminals, represented by the following formula (5) is 0.25-1, preferably 0.50-1:

$$Z=[X/(X+Y)]\times 2 \qquad (5)$$

wherein X is the number of vinyl terminals per 1,000 main chain methylene carbons of a macromonomer, and Y is the number of saturated terminals per 1,000 main chain methylene carbons of a macromonomer.

X and Y are obtained by, for example, $^1$H-NMR, $^{13}$C-NMR. or FT-IR. For example, in $^{13}$C-NMR, the presence and amount of the vinyl terminals can be confirmed by peaks at 114 ppm and 139 ppm, and those of the saturated terminals can be confirmed by peaks at 32.3 ppm, 22.9 ppm and 14.1 ppm.

The method for producing the macromonomer in the present invention is not particularly limited. Where an ethylene polymer having terminal vinyl groups, or an ethylene copolymer having terminal vinyl groups, is produced as a macromonomer, a method can be used, comprising polymerizing ethylene using a catalyst comprising as a main component a metallocene compound containing a transition metal selected from Groups 3, 4, 5 and 6 in the Periodic Table. Examples of a co-catalyst used include orgnoaluminum compounds, protonic acid salts, metal salts, Lewis acid salts, and clay minerals.

The polyethylene resin used in the present invention is obtained by, for example, polymerizing ethylene and optionally an olefin having 3 or more carbon atoms in the presence of a macromonomer using using a catalyst comprising as a main component a metallocene compound containing a transition metal selected from Groups 3, 4, 5 and 6 in the Periodic Table. Similar to the production of the macromonomer, a co-catalyst can be used. The polymerization temperature is -70 to 300°C, preferably 0-250°C, more preferably 20-150°C. Ethylene partial pressure is 0.001-300 MPa, preferably 0.005-50 MPa, more preferably 0.01-10 MPa. Hydrogen may be present as a molecular weight regulator in the polymerization system.

Where ethylene and an olefin having 3 or more carbon atoms are polymerized in the presence of a macromonomer, those can be used in a supply proportion in terms of molar ration of ethylene/olefin having 3 or more carbon atoms of 1/1 to 200/1. preferably 3/1 to 100/1, more preferably 5/1 to 50/1.

The polyethylene resin used in the present invention can contain the conventional additives such as antioxidants, weathering stabilizers, antistatic additives, antifogging additives, blocking additives, slipping additives, lubricants, nucleating additives, inorganic fillers or reinforcing additives (e.g., pigments, carbon black, talc, glass powder or glass fibers), organic fillers or reinforcing additives, flame retardants, or neutron shielding additives.

The method for producing the non-crosslinked polyethylene foam of the present invention can use any methods so long as a non-crosslinked polyethylene foam is obtained. For examples, the following methods can be employed: a method of obtaining a non-crosslinked foam by kneading a composition obtained by mixing the polyethylene resin and optionally additives (such as foaming agents, fillers, stabilizers, flame retardants, coloring materials, and other resins) with a mixer represented by Henschel mixer, V-blender, ribbon blender or tumbler blender, using an extruder, preferably vented extruder, and foaming the composition simultaneously with extrusion molding through a die such as toric die; a method of obtaining a non-crosslinked foam by forming a sheet in an unfoamed state, and foaming the sheet under heating; and a method of obtaining a non-crosslinked foam by molding into beads containing a foaming agent, and foaming the beads under heating.

Examples of the foaming agent include inorganic gas foaming agents such as carbon dioxide, nitrogen, argon or air; volatile foaming agents such as propane, butane, pentane, hexane, cyclobutane, cylohexane, trichlorofluoromethane or dichlorodufluoromethane; and chemical foaming agents that are liquid or solid at room temperature and generate gas by heating, such as barium azodicarboxylate, N,N-dinitrosopentamethylene tetramine, 4,4'-oxybis(benzenesulfonylhydrazide), diphenylsulfone-3,3'-disulfonylhydrazide, p-toluenesulfonylsemicarbazide, trihydrazinotriazine, biurea or zinc carbonate. The foaming agent is used in an amount of preferably 1-20 parts by weight, more preferably 2-5 parts by weight, per 100 parts by weight of the polyethylene resin constituting the non-crosslinked polyethylene foam of the present invention.

The non-crosslinked polyethylene foam of the present invention is a foam having high expansion ratio, and therefore has light weight. In addition, the foam has small coefficient of heat shrinkage of 5% or lower, and also has excellent heat resistance. Therefore, the expansion ratio is preferably 10-100 times, more preferably 10-60 times. Where the expansion ratio is less than 10 times, the coefficient of heat shrinkage becomes small, but light weight which is the main object to use a foam is not achieved. Thus, this is not desirable.

The non-crosslinked polyethylene foam of the present invention may comprise the ethylene resin and other resins added thereto so far as the addition does not deviate the object of the present invention. The other resin is preferably olefin polymers. Examples of the olefin polymer include conventional homopolymers or copolymers of $\alpha$-olefin. Representative examples of the olefin polymer include high density polyethylene, low density polyethylene, linear low density polyethylene, polypropylene, poly(1-butene), poly(4-methyl-1-pentene), poly(1-pentene), ethylene/propylene copolymer, ethylene/1-butene copolymer, propylene/1-butene copolymer, ethylene/propylene/1-butene copolymer, 4-methyl-1-pentene/ethylene copolymer, various propylene block copolymers and various propylene random copolymers. Those resins can be added in any proportion, and the amount added can appropriately be selected according to various situations. The amount of those resins added is preferably 50% by weight or less, more preferably 5-30% by weight.

Examples of various additive components include stabilizers that prevent oxidative deterioration or thermal deterioration, such as phenol stabilizers, organophosphate stabilizers, thioether stabilizers or hindered amine stabilizers; fillers such as spherical fillers, plate-like fillers or fibrous fillers; higher fatty acid metal salts such as alkaline earth metal salts (such as magnesium salts, calcium salts or barium salts of higher fatty acids, e.g., stearic acid, oleic acid or lauric acid); flame retardants; antistatic agents; coloring materials, lubricants, natural oils, synthetic oils; and waxes.

The present invention can obtain a non-crosslinked polyethylene foam comprising a polyethylene resin, which has good foamed state (small proportion of ununiform cells or course cells, and large proportion of uniform cells), does not have thickness unevenness of a foam, has excellent surface properties, and has high expansion ratio.

The present invention is described in more detail by reference to the following Examples, but it should be understood that the invention is not construed as being limited thereto.

Preparation of modified hectorite, preparation of catalyst for macromonomer production, production of macromonomer, production of polyethylene and solvent refining were all conducted under inert gas atmosphere. Solvents used in preparation of modified hectorite, preparation of catalyst for macromonomer production, production of macromonomer, and production of polyethylene were all previously refined, dried and deoxidized by the conventional methods. Dimethylsilanediylbis(cyclopentadienyl)zirconium chloride, diphenylmethylene(1-indenyl)(9-fluorenyl)zirconium dichloride, and diphenylmethylene(1-cyclopentadienyl)(2,7-di-t-butyl-9-fluorenyl)-zirconium dichloride were synthesized and identified by the conventional methods. Hexane solution of triisobutyl aluminum (0.714M), toluene solution of methyl alumoxane (trade name: PMAO; Al: 2.4 mol/liter) and toluene solution of triisobutyl aluminum (0.848M) used were products ofTosoh Finechem Corporation.

Properties of polyethylene resins in the Examples and Comparative Examples were measured by the following methods.

Molecular Weight and Molecular Weight Distribution

Weight average molecular weight (Mw) and number average molecular weight (Mn) were measured by gel permeation chromatography (GPC). GPC device used was HLC-8121GPC/HT, a product of Tosoh Corporation, and a column used was TSKgel GMHhr-H(20)HT, a product of Tosoh Corporation. Column temperature was set to 140°C, and 1,2,4-trichlorobenzene was used as an elutriant for measurement. Measurement sample was prepared in a concentration of 0.1 mg/ml, and injected in an amount of 0.3 ml for measurement. Calibration curve of molecular weight is corrected using a polystyrene sample having a known molecular weight. Mw and Mn were determined as values of linear polyethylene conversion.

Shrinkage Factor (g' value)

Shrinkage factor (g' value) is a value obtained by dividing [η] in an absolute molecular weight three times Mw determined with the method measuring [η] of polyethylene resin fractionated by GPC by [η] in the same molecular weight of HDPE having no branches. GPC device used was HLC-8121GPC/HT, a product of Tosoh Corporation, and a column used was TSKgel GMHhr-H(20)HT, a product of Tosoh Corporation. Column temperature was set to 145°C, and 1,2,4-trichlorobenzene was used as an elutriant for measurement. Measurement sample was prepared in a concentration of 0.1 mg/ml, and poured in an amount of 0.3 ml for measurement. Viscometer used was a capillary differential pressure viscometer 210R+, a product of Viscotek Corporation. Shrinkage Factor (g value)

Shrinkage factor (g value) was determined with a method of measuring radius of gyration of a polyethylene resin fractionated by GPC with light scattering. The shrinkage factor (g value) is a value obtained by dividing a square average of radius of gyration of a polyethylene resin used in the present invention in an absolute molecular weight three times Mw by a square average of radius of gyration in the same molecular weight of HDPE having no branch. Light scattering detector used was a multi-angle light scattering detector DAWV EOS, a product of Wyatt Technology, and measurement was made at detection angles of 29.5°, 33.3°, 39.0°, 44.8°, 50.7°, 57.5°, 64.4°, 72.3°, 81.1°, 90.0°, 98.9°, 107.7°, 116.6°, 125.4°, 133.2°, 140.0° and 145.8° with a wavelength of 690 nm.

Z value

Terminal structure of a macromonomer such as vinyl terminal or saturated terminal was measured by $^{13}$C-NMR using a nucleus magnetic resonance instrument, Model JNM-ECA400, a product of JEOL Co. A solvent used was tetrachloroethane-$d_2$. The number of vinyl terminals was determined form an average value of peaks of 114 ppm and 139 ppm in terms of the number per 1,000 main chain methylene carbons (chemical shift: 30 ppm). Similarly, the number of saturated terminals was determined from an average value of peaks of 32.3 ppm, 22.9 ppm and 14.1 ppm. From the number of vinyl terminals (X) and the number of saturated terminals (Y), Z=[X/(X+Y)] was determined.

Density

Density was measured with a density gradient tube method according to JIS K6922-1 (1998).

MFR

MFR was measured at 190°C under a load of 2.16 kg according to JIS K6922-1 (1998). Number of Long Chain Branch
The number of long chain branch of a polyethylene resin was measured by $^{13}$C-NMR using a nucleus magnetic resonance instrument, Model JNM-GSX270, a product of JEOL Co.

Melt Tension

Melt tension (MS) was measured by mounting a die having a length (L) of 8 mm, a diameter (D) of 2.095 mm and an entrance angle of 90° to a capillary viscometer having a barrel diameter of 9.55 mm (trade name: Capillograph, a product of Toyo Seiki Seisaku-Sho, Ltd.). MS is a load (mN) required for take-off when temperature is set to 160°C or 190°C, piston lowering rate is set to 10 mm/min, and stretching ratio is set to 47.

Number of Endothermic Peak

The number of endothermic peak was measured using DSC (trade name: DSC-7, a product of Perkin Elmer Co.) 5-10 mg of a polyethylene resin was placed on an aluminum pan, and the pan was mounted to DSC. Temperature was elevated to 230°C at a temperature rising rate of 80°C/min, and the sample was allowed to stand at 230°C for 3 minutes. The sample was cooled to -10°C at a temperature lowering rate 10°C/min, and the temperature was again elevated from -10°C to 150°C at a temperature rising rate of 10°C/min. Thus, temperature rising/temperature lowering operations were conducted, and the number of peaks on an endothermic curve observed at a second temperature elevation was evaluated.

Expansion ratio

A foam was cut into a piece of 10 cm x 10 cm, and thickness, t (cm), and weight, W2 (g), of the piece were measured. Apparent density of the cut piece was calculated by the following equation.

$$\text{Apparent density (g/cm}^3) = W2/(10 \times 10 \times t)$$

Expansion ratio was calculated from the apparent density by the following equation.

$$\text{Expansion ratio} = 1/\text{apparent density}$$

Coefficient of heat shrinkage

A foam was cut into a square sample of 15 cm x 15 cm. Bench marks (cross lines each having a length of 10 cm and being parallel to each side of the square sample) were drawn at the center of the square sample. This sample was placed in a hot air circulating oven at 120°C and heated for 1 hour. The sample was taken out of the oven and spontaneously cooled to room temperature. Length of each bench marks on the heat-treated sample was measured. Its average value was designated La (cm). Using this average value, coefficient of heat shrinkage was calculated according to the following equation.

$$\text{Coefficient of heat shrinkage} = \frac{10\text{-}La}{10} \times 100$$

Regarding heat resistance, a sample having coefficient of heat shrinkage in thickness direction of less than 5% was regarded "acceptable sample".

**EXAMPLE 1**

Preparation of modified hectorite

60 ml of ethanol and 2.0 ml of 37% concentrated hydrochloric acid were added to 60 ml of water. 11.7 g (0.022 mol) of N-methyl dioleylamine was added to the solution obtained, and the resulting solution was heated to 60°C to prepare N-methyl dioleylamine hydrochloride solution. 20 g of hectorite was added to the solution. The resulting suspension was stirred at 60°C for 3 hours, and a supernatant was removed. The suspension was washed with 1 liter of water at 60°C, dried at 60°C under $10^{-3}$ torr for 24 hours, and ground with a jet mill to obtain modified hectorite having an average particle diameter of 5.2 $\mu$m. As a result of elemental analysis, amount of ions per 1 g of the modified hectorite was 0.85 mmol.

Preparation of catalyst for macromonomer production

8.0 g of the modified hectorite obtained above was suspended in 29 ml of hexane. 46 ml (0.714 M) of a hexane solution of triisobutylaluminum was added to the resulting suspension, and the resulting mixture was stirred at room temperature for 1 hour to obtain a catalytic product of modified hectorite and triisobutylaluminum. On the other hand, a solution obtained by adding 14.0 mg (40 $\mu$mol) of dimethylsilanediylbis(cyclopentadienyl)zirconium dichloride to toluene was added to the suspension, and the resulting mixture was stirred at room temperature overnight to obtain a catalyst slurry (100 g/liter).

Production of macromonomer

6,000 ml of hexane and 12 ml of a hexane solution (0.714 mol/l) of triisobutylaluminum were introduced in a 10 liters autoclave. Inner temperature of the autoclave was elevated to 85°C. 3 ml of the catalyst slurry obtained above was introduced into the autoclave, and ethylene was then introduced into the autoclave until an ethylene partial pressure reaches 1.2 MPa to initiate polymerization. During the polymerization, ethylene was continuously introduced into the autoclave so as to maintain the partial pressure at 1.2 MPa. Polymerization temperature was controlled to 85°C. After 53 minutes from initiation of polymerization, the inner temperature was lowered to 50°C to reduce inner pressure of the autoclave to 0.1 MPa, and nitrogen was introduced into the autoclave until reaching 0.6 MPa, followed by pressure reduction. This operation was repeated 5 times. Macromonomer taken out of the autoclave had Mn of 10,950 and Mw/Mn of 2.61. As a result of analyzing a terminal structure of the macromonomer by $^{13}$C-NMR, a ratio (Z) of the number of vinyl terminals to the number of saturated terminals was 0.57. Further, 0.52 per 1,000 carbon atoms of methyl branches and 1.22 per 1,000 carbon atoms of ethyl branches were detected in $^{13}$C-NMR. Long chain branch was not detected in $^{13}$CNMR.

Production of polyethylene

12 ml of a hexane solution (0.714 mol/l) of triisobutylaluminum and 7 μmol of diphenylmethylene(1-cyclopentadienyl)(2,7-di-t-butyl-9-fluorenyl)zirconium chloride were introduced into a 10 liters autoclave containing the macromonomer obtained above. Inner temperature of the autoclave was elevated to 60°C. Ethylene/hydrogen mixed gas (hydrogen: 28,500 ppm) was introduced into the autoclave until its partial pressure reaches 0.2 MPa to initiate polymerization. During the polymerization, the ethylene/hydrogen mixed gas was continuously introduced into the autoclave so as to maintain the partial pressure at 0.3 MPa. Polymerization temperature was controlled to 90°C. After 173 minutes from initiation of polymerization, the inner pressure of the autoclave was reduced, and the contents were suction filtered. After drying, 865 g of a polymer was obtained. The polyethylene thus obtained had MFR of 4.3 g/10 min, density of 960 kg/m$^3$, Mw of 9.6 x 10$^4$, Mw/Mn of 6.6, and the number of long chain branches of 0.03/1,000 carbons. An endothermic curve obtained in temperature-rise measurement by a differential scanning calorimeter showed one peak. Other properties of the polymer obtained are shown in Tables 1 to 3 below.

Production of non-crosslinked polyethylene foam

A foaming ethylene polymer composition containing 100 parts by weight of polyethylene and 0.7 part by weight of talc (average particle diameter: 8 μm) as an expansion nucleator was prepared by melt blending. Using a foaming machine of a uniaxial extruder (screw diameter. 50 mm, L/D = 36; manufactured by Kyoshin Kikai K.K.) having a barrel hole for injection of a volatile liquid in the course of the barrel, an ethylene copolymer was supplied at a rate of 10 kg/hour, followed by melt kneading. Butane as a volatile liquid was injected from the barrel hole at a rate of 700 g/hour to disperse the butane. Rod-shaped foam was extruded from a round rod die (diameter: 13 mm) adjusted to 135°C that is the minimum resin temperature at which unevenness does not generate on the surface of the foam. Air was blown to the outside of the rod-shaped foam, and the foam was taken off at a rate of 5.0 m/min to obtain a rod-shaped foam having an expansion ratio of 22 times.

A non-crosslinked polyethylene foam thus obtained was visually evaluated regarding a state of cells in a cross-section of the foamed state. As a result, it was confirmed that the foam had uniform and fine cells. Further, appearance of the rod-shaped foam was smooth, and did not have unevenness.

**EXAMPLE 2**

Preparation of modified hectorite

60 ml of ethanol and 2.0 ml of 37% concentrated hydrochloric acid were added to 60 ml of water. 7.78 g (0.022 mol) of N,N-dimethyl behenylamine was added to.the solution obtained, and the resulting solution was heated to 60°C to prepare N,N-dimethyl behenylamine hydrochloride solution. 20 g of hectorite was added to the solution. The resulting suspension was stirred, at 60°C for 3 hours, and a supernatant was removed. The suspension was washed with 1 liter of water at 60°C, dried at 60°C under 10$^{-3}$ torr for 24 hours, and ground with a jet mill to obtain modified hectorite having an average particle diameter of 5.2 μm. As a result of elemental analysis, amount of ions per 1 g of the modified hectorite was 0.85 mmol.

Preparation of catalyst for macromonomer production

8.0 g of the modified hectorite obtained above was suspended in 29 ml of hexane. 46 ml (0.714 M) of a hexane solution of triisobutylaluminum was added to the resulting suspension, and the resulting mixture was stirred at room temperature for 1 hour to obtain a catalytic product of modified hectorite and triisobutylaluminum. On the other hand, a solution obtained by adding 18.9 mg (40 μmol) of diphenylsilanediylbis(cyclopentadienyl)zirconium dichloride to toluene was added to the suspension, and the resulting mixture was stirred at room temperature overnight to obtain a catalyst slurry (100 g/liter).

Production of macromonomer

6,000 ml of hexane and 5.0 ml of a hexane solution (0.714 mol/l) of triisobutylaluminum were introduced in a 10 liters autoclave. Inner temperature of the autoclave was elevated to 85°C. 0.88 ml of the catalyst slurry obtained above was introduced into the autoclave, and ethylene was then introduced into the autoclave until an ethylene partial pressure reaches 1.2 MPa to initiate polymerization. During the polymerization, ethylene was continuously introduced into the autoclave so as to maintain the partial pressure at 1.2 MPa. Polymerization temperature was controlled to 85°C. After 90 minutes from Initiation of polymerization, the inner temperature was lowered to 50°C to reduce inner pressure of the autoclave to 0. 1 MPa, and nitrogen was introduced into the autoclave until reaching 0.6 MPa, followed by pressure reduction. This operation was repeated 5 times. Macromonomer taken out of the autoclave had Mn of 14,400 and Mw/Mn of 3.02. As a result of analyzing a terminal structure of the macromonomer by $^{13}$C-NMR, a ratio (Z) of the number of vinyl terminals to the number of saturated terminals was 0.65. Further, 0.41 per 1,000 carbon atoms of methyl branches and 0.96 per 1,000 carbon atoms of ethyl branches were detected in $^{13}$C-NMR. Long chain branch was not detected in $^{13}$C-NMR

Production of polyethylene

1.4 ml of a hexane solution (0.714 mol/l) of triisobutylaluminum and 7 $\mu$mol of diplienylmethylene(1-cyclopentadienyl)(2,7-di-t-butyl-9-fluorenyl)zirconium chloride were introduced into a 10 liters autoclave containing the macromonomer obtained above. Inner temperature of the autoclave was elevated to 90°C. Ethylene/hydrogen mixed gas (hydrogen. 3,600 ppm) was introduced into the autoclave until its partial pressure reaches 0.3 MPa to initiate polymerization. During the polymerization, the ethylene/hydrogen mixed gas was continuously introduced into the autoclave so as to maintain the partial pressure at 0.3 MPa. Polymerization temperature was controlled to 90°C. After 194 minutes from initiation of polymerization, the inner pressure of the autoclave was reduced, and the contents were suction filtered. After drying, 870 g of a polymer was obtained. The polyethylene thus obtained had MFR of 6.1 g/10 min, density of 958 kg/m$^3$, Mw of 9.7 x 10$^4$, Mw/Mn of 7.2, and the number of long chain branches of 0.03/1,000 carbons. An endothermic curve obtained in temperature-rise measurement by a differential scanning calorimeter showed one peak. Other properties of the polymer obtained are shown in Tables 1 to 3 below.

Production of non-crosslinked polyethylene foam

A foaming ethylene polymer composition was prepared in the same manner as in Example 1. Using the composition, a non-crosslinked polyethylene foam was obtained in the same manner as in Example 1.
The non-crosslinked polyethylene foam thus obtained was visually evaluated regarding a state of cells in a cross-section of the foamed state. As a result, it was confirmed that the foam had an expansion ratio of 22 times, and also had uniform and fine cells. Further, appearance of the rod-shaped foam was smooth.

**EXAMPLE 3**

Production of macromonomer

6,000 ml of hexane and 5.0 ml of a hexane solution (0.714 mol/l) of triisobutylaluminum were introduced in a 10 liters autoclave. Inner temperature of the autoclave was elevated to 90°C. 25 ml of the catalyst slurry for macromonomer production obtained in Example 1 was introduced into the autoclave, and ethylene was then introduced into the autoclave until an ethylene partial pressure reaches 1.2 MPa to initiate polymerization. During the polymerization, ethylene was continuously introduced into the autoclave so as to maintain the partial pressure at 1.2 MPa. Polymerization temperature was controlled to 90°C. After 16 minutes from initiation of polymerization, the inner temperature was lowered to 50°C to reduce inner pressure of the autoclave to 0.1 MPa, and nitrogen was introduced into the autoclave until reaching 0.6 MPa, followed by pressure reduction. This operation was repeated 5 times. Macromonomer taken out of the autoclave had Mn of 9,600 and Mw/Mn of 2.30. As a result of analyzing a terminal structure of the macromonomer by $^{13}$C-NMR, a ratio (Z) of the number of vinyl terminals to the number of saturated terminals was 0.57. Further, 0.52 per 1,000 carbon atoms of methyl branches and 1.22 per 1,000 carbon atoms of ethyl branches were detected in $^{13}$C-NMR. Long chain branch was not detected in $^{13}$C-NMR.

Production of polyethylene

5 ml of a hexane solution (0.714 mol/l) of triisobutylaluminum and 7 $\mu$mol of diphenylmethylene(1-fluorenyl)(9-fluorenyl)zirconium chloride were introduced into a 10 liters autoclave containing the macromonomer obtained above. Inner temperature of the autoclave was elevated to 90°C. Ethylene was introduced into the autoclave until its partial pressure reaches 0.1 MPa to initiate polymerization. During the polymerization, ethylene was continuously introduced into the autoclave so as to maintain the partial pressure at 0.1MPa. Polymerization temperature was controlled to 90°C.

After 180 minutes from initiation of polymerization, the inner pressure of the autoclave was reduced, and the contents were suction filtered. After drying, 665 g of a polymer was obtained. The polyethylene thus obtained had MFR of 8.0 g/ 10 min, density of 972 kg/m$^3$, Mw of 8.6 x 10$^4$, Mw/Mn of 6.4, and the number of long chain branches of 0.03/1,000 carbons. An endothermic curve obtained in temperature-rise measurement by a differential scanning calorimeter showed one peak. Other physical properties of the polymer obtained are shown in Tables 1 to 3 below.

Production of non-crosslinked polyethylene foam

A foaming ethylene polymer composition was prepared in the same manner as in Example 1. Using the composition, a non-crosslinked polyethylene foam was obtained

in the same manner as in Example 1.

The non-crosslinked polyethylene foam thus obtained was visually evaluated regarding a state of cells in a cross-section of the foam. As a result, it was confirmed that the foam had an expansion ratio of 22 times, and also had uniform and fine cells. Further, appearance of the rod-shaped foam was smooth.

## COMPARATIVE EXAMPLE 1

Using a commercially available high density polyethylene (trade name: NIPOLONHARD #4000, a product of Tosoh Corporation, MFR=5.0 g/10 min, density: 965 kg/m$^3$) showing one peak in an endothermic curve obtained in temperature-rise measurement by a differential scanning calorimeter, an foaming polyethylene polymer composition was prepared in the same manner as in Example 1, and using the composition, it was tried to foam a non-crosslinked polyethylene foam.

The state of cells in foaming was observed. As a result, it was confirmed that cells collapsed during growth of cells, and the foam obtained had low expansion ratio and ununiform cells. Further, the rod-shaped foam had rough appearance, and could not be put into practical use.

## COMPARATIVE EXAMPLE 2

50 wt% of a commercially available low density polyethylene (trade name: PETROTHENE 203, a product of Tosoh Corporation, MFR=8.0 g/10 min, density: 919 kg/m$^3$) was mixed with a commercially available high density polyethylene (trade name: NIPOLONHARD #2500, a product of Tosoh Corporation, MFR=8.0 g/10 min, density: 961 kg/m$^3$). Using the resulting mixture, a foaming polyethylene polymer composition was prepared in the same manner as in Example 1, and using the composition, it was tried to mold a non-crosslinked polyethylene foam. The mixture of the high density polyethylene and the low density polyethylene showed two peaks in an endothermic curve obtained in temperature-rise measurement by a differential scanning calorimeter. The state of cells in foaming was observed. As a result, it was confirmed that cells collapsed during growth of cells, and the foam obtained had low expansion ratio and ununiform cells. Further, the rod-shaped foam had rough appearance, and could not be put into practical use.

**TABLE 1** (Melt tension at 190°C)

|  | MS$_{190}$ (mN) | Right side of Formula (1) | Right side of Formula (1)' | Right side of Formula (1)" |
|---|---|---|---|---|
| Example 1 | 65 | 6.5 | 8.9 | 13.9 |
| Example 2 | 52 | 4.5 | 6.2 | 11.2 |
| Example3 | 41 | 3.5 | 4.8 | 9.8 |
| Comparative Example1 | 13 | 5.3 | 7.3 | 12.3 |
| Comparative Example 2 | 30 | 3.5 | 4.8 | 9.8 |

**TABLE 2** (Melt tension at 160°C)

| | $MS_{160}$ (mN) | Right side of Formula (2) | Right side of Formula (2)' | Right side of Formula (2)" |
|---|---|---|---|---|
| Example 1 | 130 | 43.8 | 63.8 | 83.8 |
| Example 2 | 103 | 24.4 | 44.4 | 64.4 |
| Example 3 | 85 | 10.7 | 30.1 | 50.7 |
| Comparative Example 1 | 23 | 33.1 | 53.1 | 73.1 |
| Comparative Example 2 | 50 | 10.7 | 30.1 | 50.7 |

**TABLE 3** (Dilute solution properties and number of long chain branch)

| | g' | log (g')/log (g) | $g_{3M}/g_M$ | Number of long chain branch (/1,000 carbon) |
|---|---|---|---|---|
| Example 1 | 0.43 | 0.8 | 0.7 | 0.03 |
| Example 2 | 0.41 | 0.8 | 0.7 | 0.03 |
| Example 3 | 0.39 | 0.7 | 0.6 | 0.03 |
| Comparative Example 1 | 1.0 | - | 1.0 | <0.01 |
| Comparative Example 2 | 0.72 | 0.9 | 0.9 | 2 |

TABLE 4 (Foaming result of foam)

| | Expansion ratio | Surface state | Cell diameter | Coefficient of heat shrinkage |
|---|---|---|---|---|
| Example 1 | 22 | Good | Uniform, fine | 2.4% |
| Example 2 | 22 | Good | Uniform, fine | 1.6% |
| Example 3 | 22 | Good | Uniform, fine | 1.3% |
| Comparative Example 1 | 3 | Poor | Huge | - |
| Comparative Example 2 | 8 | Poor | Huge | - |

**Claims**

1. A non-crosslinked polyethylene foam obtained by foaming a polyethylene resin satisfying the following requirements (a) to (d):

   (a) a density is 890-980 kg/m$^3$;
   (b) the number of long chain branches having 6 or more carbon atoms is 0.01-3 per 1,000 carbon atoms;
   (c) a melt tension (mN) measured at 190°C ($MS_{190}$) and MFR (melt flow rate: g/10 min, 190°C) under a load of 2.16 kg are satisfied with the following formula (1):

$$MS_{190} > 22 \times MFR^{-0.88} \qquad (1)$$

   and a melt tension (mN) measured at 160°C ($MS_{160}$) and MFR (melt flow rate: g/10 min, 190°C) under a load of 2.16 kg are satisfied with the following formula (2):

$$MS_{160} > 110 - 110 \times \log (MFR) \qquad (2)$$

(d) an endothermic curve obtained in temperature-rise measurement by a differential scanning calorimeter shows one peak.

2. The non-crosslinked polyethylene foam as claimed in claim 1, which is obtained by foaming a polyethylene resin obtained by polymerizing ethylene and optionally an olefin having 3 or more carbon atoms in the presence of a macromonomer which is a polyethylene having terminal vinyl groups obtained by polymerizing ethylene, or a copolymer having terminal vinyl groups obtained by copolymerizing ethylene and an olefin having 3 or more carbon atoms, has the following requirements:

> (e) a number average molecular weight (Mn) is 2,000 or higher, and
> (f) Mw/Mn is 2-5.

3. The non-crosslinked polyethylene foam as claimed in claim 2, wherein the macromonomer is obtained by polymerizing ethylene, and comprises a polyethylene which is a linear or branched ethylene polymer having terminal vinyl groups, the ethylene polymer satisfying the following requirements:

> (e) a number average molecular weight (Mn) is 5,000 or higher, and
> (f) Mw/Mn is 2-5.

4. The non-crosslinked polyethylene foam as claimed in any one of claims 1 to 3, wherein the polyethylene resin has a density of 940-980 kg/m$^3$.

5. The non-crosslinked polyethylene foam as claimed in any one of claims 1 to 4, wherein the polyethylene resin has MFR at 190°C under a load of 2.16 kg of 0.1-50 g/10 min.

6. The non-crosslinked, polyethylene foam as claimed in any one of claims 1 to 5, which has a foaming ratio of 10 times or more, and a coefficient of heat shrinkage when heat-treated under atmosphere of 120°C for 1 hour, of less than 5%.

**Patentansprüche**

1. Unvernetzter Polyethylenschaum, erhalten durch Aufschäumen eines Polyethylenharzes, das die folgenden Erfordernisse (a) bis (d) erfüllt:

> (a) eine Dichte beträgt 890-980 kg/m$^3$;
> (b) die Anzahl von langkettigen Zweigen mit 6 oder mehr Kohlenstoffatomen beträgt 0,01-3 pro 1000 Kohlenstoffatome;
> (c) eine Schmelzspannung (mN), gemessen bei 190°C (MS$_{190}$), und ein MFR (Schmelzflussrate: g/10 min, 190°C) unter einer Belastung von 2,16 kg erfüllen die folgende Formel (I) :

$$MS_{190} > 22 \times MFR^{-0,88} \qquad (1)$$

und eine Schmelzspannung, gemessen bei 160°C (MS$_{160}$) und ein MFR (Schmelzflussrate: g/10 min, 190°C) unter einer Belastung von 2,16 kg erfüllen die folgende Formel (2):

$$MS_{160} > 110 - 110 \times \log (MFR) \qquad (2)$$

> (d) eine endotherme Kurve, erhalten in einer Messung des Temperaturanstiegs durch ein Differentialscanningkalorimeter, zeigt einen Peak.

2. Unvernetzter Polyethylenschaum nach Anspruch 1, der erhalten wird durch Aufschäumen eines Polyethylenharzes, erhalten durch Polymerisieren von Ethylen und wahlweise einem Olefin mit 3 oder mehr Kohlenstoffatomen im Vorhandensein eines Makromonomers, das ein Polyethylen mit terminalen Vinylgruppen ist, erhalten durch Polymerisieren von Ethylen, oder ein Copolymer mit terminalen Vinylgruppen ist, erhalten durch Copolymerisieren von Ethylen und einem Olefin mit 3 oder mehr Kohlenstoffatomen, wobei der unvernetzte Polyethylenschaum die folgenden Erfordernisse hat:

(e) ein Molekulargewichtszahlenmittel (Mn) ist 2000 oder höher, und
(f) Mw/Mn ist 2-5.

**3.** Unvernetzter Polyethylenschaum nach Anspruch 2, wobei das Makromonomer erhalten wird durch Polymerisieren von Ethylen, und umfasst ein Polyethylen, das ein lineares oder verzweigtes Ethylenpolymer mit terminalen Vinylgruppen ist, wobei das Ethylenpolymer die folgenden Erfordernisse erfüllt:

(e) ein Molekulargewichtszahlenmittel (Mn) ist 5000 oder höher, und
(f) Mw/Mn ist 2-5.

**4.** Unvernetzter Polyethylenschaum nach einem der Ansprüche 1 bis 3, wobei das Polyethylenharz eine Dichte von 940-980 kg/m$^3$ hat.

**5.** Unvernetzter Polyethylenschaum nach einem der Ansprüche 1 bis 4, wobei das Polyethylenharz einen MFR bei 190°C unter einer Belastung von 2,16 kg von 0,1 - 50 g/10 min hat.

**6.** Unvernetzter Polyethylenschaum nach einem der Ansprüche 1 bis 5, der ein Aufschäumungsverhältnis von 10 Mal oder mehr hat, und einen Koeffizienten der Wärmeschrumpfung, wenn wärmebehandelt unter einer Atmosphäre von 120°C für 1 Stunde, von weniger als 5%.

**Revendications**

**1.** Mousse de polyéthylène non réticulée obtenue par expansion d'une résine de polyéthylène satisfaisant aux exigences (a) à (d) :

(a) une masse volumique est de 890 - 980 kg/m$^3$ ;
(b) le nombre de branches à chaîne longue comportant 6 atomes de carbone ou plus est de 0,01 - 3 pour 1 000 atomes de carbone ;
(c) une tension à chaud (mN) mesurée à 190°C ($MS_{190}$) et un MFR (indice d'écoulement à chaud ; g/10 min, 190°C) sous une charge de 2,16 kg satisfont la formule (1) suivante :

$$MS_{190} > 22 \times MFR^{-0,88} \qquad (1)$$

et une tension à chaud (mN) mesurée à 160°C ($MS_{160}$) et un MFR (indice d'écoulement à chaud ; g/10 min, 190°C) sous une charge de 2,16 kg satisfont la formule (2) suivante :

$$MS_{190} > 110 - 110 \times \log(MFR) \qquad (2)$$

(d) une courbe endothermique obtenue par mesure par élévation de la température par un dispositif d'analyse calorimétrique différentielle présente un seul pic.

**2.** Mousse de polyéthylène non réticulée selon la revendication 1, qui est obtenue par expansion d'une résine de polyéthylène obtenue par polymérisation d'éthylène et éventuellement d'une oléfine comportant 3 atomes de carbone ou plus en présence d'un macro-monomère qui est un polyéthylène portant des groupes vinyle terminaux obtenu par polymérisation d'éthylène, ou un copolymère portant des groupes vinyle terminaux obtenu par copolymérisation d'éthylène et d'une oléfine comportant 3 atomes de carbone ou plus, satisfaisant les exigences suivantes :

(e) une masse moléculaire moyenne en nombre (Mn) est de 2 000 ou plus, et
(f) Mp/Mn vaut 2 - 5.

**3.** Mousse de polyéthylène non réticulée selon la revendication 2, dans laquelle le macro-monomère est obtenu par polymérisation d'éthylène et qui comprend un polyéthylène qui est un polymère d'éthylène linéaire ou ramifié portant des groupes vinyle terminaux, le polymère d'éthylène satisfaisant aux exigences suivantes :

(e) une masse moléculaire moyenne en nombre (Mn) est de 5 000 ou plus, et
(f) Mp/Mn vaut 2 - 5.

4. Mousse de polyéthylène non réticulée selon l'une quelconque des revendications 1 à 3, dans laquelle la résine de polyéthylène a une masse volumique de 940 - 980 kg/m$^3$.

5. Mousse de polyéthylène non réticulée selon l'une quelconque des revendications 1 à 4, dans laquelle la résine de polyéthylène un MFR à 190°C sous une charge de 2,16 kg de 0,1 - 50 g/10 min.

6. Mousse de polyéthylène non réticulée selon l'une quelconque des revendications 1 à 5, qui a un taux d'expansion de 10 ou plus, et un coefficient de rétrécissement thermique lorsqu'elle est traitée thermiquement dans une atmosphère de 120°C pendant 1 heure, inférieur à 5 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10007726 A
- JP 2132109 A
- JP 7134359 A
- JP 2003 A
- JP 327757 A
- JP 11246713 A
- JP 2003327757 A